# EUROPÄISCHE PATENTANMELDUNG

(11) **EP 1 746 363 A2**
(43) Veröffentlichungstag der Anmeldung: **24.01.2007**
(21) Anmeldenummer: 06117503.0
(22) Anmeldetag: 19.07.2006
(51) Int. Cl.: F24J 2/07

(54) **Solarstrahlungsempfänger und Verfahren zur Steuerung und/oder Regelung der Massenstromverteilung und/oder zum Temperaturausgleich an einem Solarstrahlungsempfänger**

(30) Priorität: 21.07.2005 DE 102005035080
(71) Anmelder: Deutsches Zentrum für Luft- und Raumfahrt e.V., 51147 Köln (DE)
(72) Erfinder: Buck, Reiner, 70563, Stuttgart (DE); Uhlig, Ralf, 70567, Stuttgart (DE)
(74) Vertreter: Hoeger, Stellrecht & Partner Patentanwälte

(57) **Zusammenfassung**

Um einen Solarstrahlungsempfänger zur solaren Erhitzung eines Wärmeübertragungsfluids, umfassend eine Fluidzuführungseinrichtung (36,80), eine Fluidabführungseinrichtung (38,82), und zwischen der Fluidzuführungseinrichtung (36,80) und der Fluidabführungseinrichtung (38,82) angeordnete Absorberrohre (50,88,90) zur Fluidführung, welche mit Solarstrahlung (28) beaufschlagbar sind, bereitzustellen, wird vorgeschlagen, dass bezogen auf die Strömungsführung des Wärmeübertragungsfluids zwischen der Fluidzuführungseinrichtung (36,80) und der Fluidabführungseinrichtung (38,82) mindestens ein Zwischenverteilungsraum (54,84) angeordnet ist, welcher über Absorberrohre (50,88,90) in fluidwirksamer Verbindung mit der Fluidzuführungseinrichtung (36,80) und der Fluidabführungseinrichtung (38,82) steht.

## Beschreibung

Die Erfindung betrifft einen Solarstrahlungsempfänger zur solaren Erhitzung eines Wärmeübertragungsfluids, umfassend eine Fluidzuführungseinrichtung, eine Fluidabführungseinrichtung, und zwischen der Fluidzuführungseinrichtung und der Fluidabführungseinrichtung angeordnete Absorberrohre zur Fluidführung, welche mit Solarstrahlung beaufschlagbar sind.

Die Erfindung betrifft ferner ein Verfahren zur Steuerung und/oder Regelung der Massenstromverteilung und/oder zum Temperaturausgleich an einem Solarstrahlungsempfänger mit Absorberrohren, durch welche ein Wärmeübertragungsfluid geführt wird.

Durch die Solarstrahlungsbeaufschlagung der Absorberrohre wird das darin geführte Wärmeübertragungsfluid (beispielsweise Luft oder Wasserdampf) erhitzt. Die Absorberrohre werden insbesondere direkt mit konzentrierter Solarstrahlung beaufschlagt.

Der Erfindung liegt die Aufgabe zugrunde, einen Solarstrahlungsempfänger der eingangs genannten Art bereitzustellen, mittels dem sich hohe Austrittstemperaturen des Wärmeübertragungsfluids erreichen lassen.

Diese Aufgabe wird bei dem eingangs genannten Solarstrahlungsempfänger erfindungsgemäß dadurch gelöst, dass bezogen auf die Strömungsführung des Fluids zwischen der Fluidzuführungseinrichtung und der Fluidabführungseinrichtung mindestens ein Zwischenverteilungsraum angeordnet ist, welcher über Absorberrohre in fluidwirksamer Verbindung mit der Fluidzuführungseinrichtung und der Fluidabführungseinrichtung steht.

In dem Zwischenverteilungsraum lässt sich Wärmeübertragungsfluid aus unterschiedlichen Absorberrohren mischen. Dadurch lässt sich ein Temperaturausgleich erreichen. Dadurch wiederum lässt sich eine gleichmäßigere Temperaturverteilung über unterschiedliche Absorberrohre realisieren. Es ist dann möglich, höhere Austrittstemperaturen zu erreichen, da keine Anpassung der Einstrahlungsleistung auf das höchstbelastete Rohr notwendig wird, da durch die Zwischenvermischung eine Höchstbelastung abfangbar ist; die Absorberrohre werden auch bei ungleichmäßiger Solareinstrahlung gleichmäßiger belastet.

Durch die erfindungsgemäße Lösung wird es möglich, Austrittstemperaturen bis ca. 900°C bei hohen Wirkungsgraden und hoher Lebensdauer des Strahlungsempfängers zu erreichen. Dies ermöglicht beispielsweise die Kombination einer Mikroturbine mit einem einzigen Solarstrahlungsempfänger (Rohrreceiver) zu einem solaren Kleinkraftwerk.

Günstig ist es, wenn in den mindestens einen Zwischenverteilungsraum mindestens ein Absorberrohr mündet, welches mit der Fluidzuführungseinrichtung oder einem benachbarten Zwischenverteilungsraum verbunden ist. Dadurch lässt sich Wärmeübertragungsfluid in den Zwischenverteilungsraum einkoppeln, welches in einem Absorberrohr erhitzt wurde.

Es ist insbesondere vorgesehen, dass der Zwischenverteilungsraum so angeordnet ist, dass er der Solarstrahlung nicht ausgesetzt ist.

Der Zwischenverteilungsraum kann beispielsweise durch Verschaltung von Absorberrohrmodulen oder über Parallelanordnung von Absorberrohren entsprechend einer Parallelserienschaltung realisiert sein.

Besonders vorteilhaft ist es, wenn eine Mehrzahl von Absorberrohren in den mindestens einen Zwischenverteilungsraum münden. Dadurch lassen sich Teilströme in den Zwischenverteilungsraum einkoppeln und es lässt sich dort eine Vermischung durchführen. Dadurch lassen sich Temperaturunterschiede in unterschiedlichen Absorberrohren ausgleichen, das heißt es lässt sich eine "Temperatur-Zwischenhomogenisierung" für das Wärmeübertragungsfluid erreichen.

Ebenfalls günstig ist es, wenn von dem mindestens einen Zwischenverteilungsraum mindestens ein Absorberrohr zu der Fluidabführungseinrichtung oder einem benachbarten Zwischenverteilungsraum geführt ist. Dadurch lässt sich Mischungsfluid mit dem entsprechenden Temperaturausgleich in das mindestens eine Absorberrohr einkoppeln zur weiteren Erhitzung.

Ganz besonders vorteilhaft ist es, wenn eine Mehrzahl von Absorberrohren von dem mindestens einen Zwischenverteilungsraum zu der Fluidabführungseinrichtung oder zu einem benachbarten Zwischenverteilungsraum geführt sind. Dadurch lässt sich Mischungsfluid mit der entsprechenden TemperaturHomogenisierung in Teilströme aufteilen. Durch die Mehrzahl von Absorberrohren wird eine größere Absorberfläche bereitgestellt.

Beispielsweise weist der mindestens eine Zwischenverteilungsraum eine Erstreckungsrichtung auf, welche mindestens näherungsweise parallel zu einer Erstreckungsrichtung der Fluidzuführungseinrichtung und/oder der Fluidabführungseinrichtung ist. Dadurch lässt sich auf einfache Weise eine gute Vermischung von in den Zwischenverteilungsraum eingekoppeltem Wärmeübertragungsfluid erreichen. Die Strömungsrichtung des Wärmeübertragungsfluids liegt üblicherweise senkrecht zur Erstreckungsrichtung der Fluidzuführungseinrichtung bzw. Fluidabführungseinrichtung bzw. weist zumindest eine relevante Komponente senkrecht zu dieser Erstreckungsrichtung auf. Durch die entsprechende Orientierung des Zwischenverteilungsraums lassen sich Teilströme einkoppeln und vermischen. Die Erstreckungsrichtung kann linear sein oder beispielsweise gekrümmt sein.

Günstigerweise weist der Zwischenverteilungsraum eine Erstreckungsrichtung auf, welche quer und insbesondere senkrecht zu der Erstreckungsrichtung von Absorberrohren liegt. Dadurch lassen sich Teilströme aus mehreren Absorberrohren auf einfache Weise in den Verteilungsraum einkoppeln und es lässt sich eine effektive Vermischung erreichen. Weiterhin lässt sich auf einfache Weise Wärmeübertragungsfluid aus dem Zwischenverteilungsraum auf eine Mehrzahl von Absorberrohren aufteilen.

Insbesondere sind die Abmessungen des mindestens einen Zwischenverteilungsraums in seiner Erstreckungsrichtung größer als der Abstand benachbarter Absorberrohre. Dadurch lassen sich die Teilströme, welche in Absorberrohren geführt sind, in den Zwischenverteilungsraum einkoppeln.

Insbesondere sind Absorberrohre, welche von der Fluidzuführungseinrichtung zu der Fluidabführungseinrichtung führen, im wesentlichen parallel zueinander ausgerichtet. Es lässt sich dadurch über ein Rohrregister eine Absorberstruktur bereitstellen, welche auf einfache Weise herstellbar ist.

Beispielsweise ist der mindestens eine Zwischenverteilungsraum in einem Rohr gebildet. Das Rohr ist ein Zwischenrohr, welches (bezogen auf die Strömungsrichtung des Wärmeübertragungsfluids) zwischen einem Verteilungsrohr der Fluidzuführungseinrichtung und einem Sammelrohr der Fluidabführungseinrichtung angeordnet ist.

Ganz besonders vorteilhaft ist es, wenn der mindestens eine Zwischenverteilungsraum so ausgebildet und angeordnet ist, dass Wärmeübertragungsfluid, welches aus unterschiedlichen Absorberrohren einströmt, in dem Zwischenverteilungsraum mischbar ist. Dadurch lassen sich Temperaturunterschiede homogenisieren. Dadurch wiederum wird eine Spitzenbelastung an einzelnen Absorberrohren vermieden. Dies wiederum ermöglicht es, höhere Austrittstemperaturen zu erreichen.

Es kann vorgesehen sein, dass der mindestens eine Zwischenverteilungsraum so ausgebildet und angeordnet ist, dass die Strömungsrichtung in Absorberrohren veränderbar ist. Insbesondere wird durch "Umlenkung" in dem Zwischenverteilungsraum die Strömungsrichtung verändert und insbesondere umgekehrt. Dadurch lässt sich beispielsweise eine Gegenstromführung von Wärmeübertragungsfluid in unterschiedlichen Absorberrohren erreichen. Dies erhöht die Wärmeübertragungseffektivität.

Bei einer vorteilhaften Ausführungsform ist mindestens eine erste Lage und eine zweite Lage von Absorberrohren vorgesehen, wobei die erste Lage vor der zweiten Lage angeordnet ist. Die Anordnung bezieht sich dabei auf die Solarstrahlungsrichtung; die erste Lage liegt vor der zweiten Lage. Es lässt sich dadurch eine größere Wärmeübertragungsfläche bereitstellen, da die zweite Lage nur teilweise an die Umgebung abstrahlen kann. Weiterhin lässt sich eine "Vorwärmung" von Wärmeübertragungsfluid in den Absorberrohren der ersten Lage erreichen. Wärmeübertragungsfluid aus den Absorberrohren der ersten Lage lässt sich vermischen und über den Zwischenverteilungsraum in Absorberrohre der zweiten Lage einkoppeln. Dort kann eine weitere Erhitzung stattfinden. Durch die Anordnung in mindestens zwei Lagen lässt sich ein kompakter Aufbau erreichen. Weiterhin ist es beispielsweise auch möglich, Absorberrohre, welche heißeres Wärmeübertragungsfluid führen, mindestens teilweise hinter Absorberrohren, welche kälteres Wärmeübertragungsfluid führen, zu "verstecken". Dadurch lässt sich der Wirkungsgrad der Absorberstruktur erhöhen. Grundsätzlich ist es möglich, dass auch drei oder mehr Lagen an Absorberrohren vorgesehen sind.

Insbesondere sind Absorberrohre der ersten Lage zwischen der Fluidzuführungseinrichtung und dem mindestens einen Zwischenverteilungsraum geführt und Absorberrohre der zweiten Lage zwischen dem mindestens einen Zwischenverteilungsraum und der Fluidabführungseinrichtung geführt. Dadurch lässt sich eine Gegenstromführung von Wärmeübertragungsfluid in der Absorberstruktur erreichen; das Wärmeübertragungsfluid ist in Absorberrohren der ersten Lage und in Absorberrohren der zweiten Lage in Gegenstrom geführt. Dadurch ergibt sich ein hoher Wirkungsgrad.

Insbesondere sind die Fluidabführungseinrichtung und die Fluidzuführungseinrichtung auf einer dem mindestens einen Zwischenverteilungsraum gegenüberliegenden Seite angeordnet. Dadurch ergibt sich ein kompakter Aufbau des Solarstrahlungsempfängers.

Bei einer konstruktiv einfachen Ausführungsform sind die Fluidzuführungseinrichtung und die Fluidabführungseinrichtung in dem gleichen Rohr angeordnet. Dieses Rohr bildet insbesondere unterschiedliche Kammern aus, wobei eine Kammer als Verteilerraum zur Einkopplung von Wärmeübertragungsfluid in die Absorberrohre der ersten Lage dient, und bildet eine weitere Kammer aus, welche als Sammelraum zur Auskopplung von erhitztem Wärmeübertragungsfluid dient.

Günstig ist es, wenn Absorberrohre der zweiten Lage versetzt zu Absorberrohren der ersten Lage angeordnet sind. Dadurch lässt sich die Wärmeübertragungsfläche der Absorberstruktur vergrößern.

Es kann dabei vorgesehen sein, dass Absorberrohre der erste Lage Absorberrohre der zweiten Lage mindestens teilweise bezüglich Solarstrahlung abdecken. Dadurch lässt sich der Wirkungsgrad des Solarstrahlungsempfängers erhöhen.

Die eingangs genannte Aufgabe wird ferner erfindungsgemäß dadurch gelöst, dass ein Absorberrohr eine Kompensatoreinrichtung zur Dehnungskompensation aufweist.

Die Temperaturbelastung eines Absorberrohrs führt zu einer Längendehnung. Unterschiedliche Einstrahlungsstärken führen zu unterschiedlichen Temperaturen in unterschiedlichen Absorberrohren, was zu unterschiedlichen Dehnungen führt. Durch die Kompensationseinrichtung lassen sich solche unterschiedlichen (Längen-)Dehnungen kompensieren. Dadurch werden Spannungen zwischen der Fluidzuführungseinrichtung, den Absorberrohren und der Fluidabführungseinrichtung erniedrigt und damit auch die Lebensdauer erhöht (insbesondere bei wechselnden Belastungen).

Insbesondere weist jedes Absorberrohr eine Kompensationseinrichtung auf.

Beispielsweise ist die Kompensationseinrichtung durch aufeinander folgende Bereiche unterschiedlichen Durchmessers gebildet. Dadurch lässt sich an einem Absorberrohr eine Art von Balg bereitstellen, über den eine Dehnungskompensation erreichbar ist. Beispielsweise erstreckt sich solch ein Kompensationseinrichtungs-Bereich über die ganze Länge des Absorberrohrs oder ist an oder in der Nähe eines Endes oder an oder in der Nähe von beiden Enden des Absorberrohrs angeordnet.

Es ist auch möglich, dass die Kompensationseinrichtung durch mindestens einen Biegebereichs an dem Absorberrohr gebildet ist. Dem Absorberrohr wird eine solche Gestalt gegebenen, und zwar durch Biegung, dass unterschiedliche Wärmedehnungen längs des Absorberrohrs kompensierbar sind.

Die eingangs genannte Aufgabe wird ferner erfindungsgemäß dadurch gelöst, dass ein Absorberrohr über seine Erstreckungsrichtung einen variierenden Querschnitt aufweist.

Im Bereich eines engeren Querschnitts ergibt sich eine höhere Strömungsgeschwindigkeit und damit ein erhöhter Wärmeübergang. Durch definiert eingestellte Querschnittsvariation lässt sich der Wärmeübergang an entsprechenden Stellen erhöhen, ohne dass der Gesamtdruckverlust zu stark ansteigt. (Wenn dem Absorberrohr ein einheitlicher engerer Querschnitt gegeben wird, dann ist der Druckverlust höher.)

Insbesondere ist mindestens ein Bereich mit einem sich erweiternden Querschnitt vorgesehen. Der Querschnitt kann sich beispielsweise konisch erweitern. Beispielsweise kann es vorgesehen sein, dass sich der Querschnitt eines Absorberrohrs von einem Eintritt (welcher an der Fluidzuführungseinrichtung liegt) sich in Richtung eines Austritts (welcher an der Fluidabführungseinrichtung liegt) verringert und insbesondere monoton erhöht. Dadurch lässt sich der Temperaturgradient zwischen Wärmeübertragungsfluid in dem Absorberrohr und der Wand des Absorberrohrs so verringern, dass die Temperaturspreizung der Absorberrohr-Wand zwischen Eintritt und Austritt verringert ist; in einem engeren Bereich lässt sich eine bessere Kühlung erreichen.

Die eingangs genannte Aufgabe wird ferner erfindungsgemäß dadurch gelöst, dass bezogen auf die Solarstrahlungsrichtung vor einem oder mehreren Absorberrohren ein Glasvorbau angeordnet ist.

Durch einen Glasvorbau lassen sich Verluste durch thermische Abstrahlung und Konvektion, verringern. Glas wie beispielsweise Quarzglas lässt Solarstrahlung fast vollständig passieren, während Infrarotstrahlung, welche von der Absorberstruktur abgestrahlt wird, teilweise absorbiert wird. Der Wärmeverlust durch das Glas selber ist gering, da Glas eine geringe Wärmeleitfähigkeit aufweist.

Durch einen Glasvorbau lässt sich der Wirkungsgrad erhöhen.

Beispielsweise ist das Glas des Glasvorbaus mit einer Anti-Reflexions-Beschichtung versehen, um Reflexionsverluste gering zu halten.

Bei einer Ausführungsform ist der Glasvorbau durch eine oder mehrere Platten gebildet. Beispielsweise ist eine einzige Platte vor einer Mehrzahl von Absorberrohren angeordnet. Es ist auch möglich, dass mehrere Glasplatten vorgesehen sind, wobei beispielsweise eine jeweilige Glasplatte einem einzigen Absorberrohr oder einer Gruppe von Absorberrohren zugeordnet ist.

Es ist auch möglich, dass der Glasvorbau durch ein Glasrohr oder Glasrohrteil gebildet ist, welches ein Absorberrohr mindestens teilweise umgibt. Beispielsweise ist ein Absorberrohr in einem Glasrohr angeordnet oder ein Halbglasrohr deckt ein Absorberrohr zu der Solarstrahlungsrichtung hin ab.

Die eingangs genannte Aufgabe wird erfindungsgemäß ferner dadurch gelöst, dass die Absorberrohre in einem Hohlraum angeordnet sind.

Durch das Vorsehen eines Hohlraums lässt sich die absorbierende Fläche bezüglich der abstrahlenden Fläche vergrößern. Dadurch kann der Wärmeübergang in der Absorberstruktur niedriger ausfallen. Durch einen niedrigeren Wärmeübergang lässt sich der Druckverlust erniedrigen. Weiterhin lässt sich durch das Vorsehen eines Hohlraums eine Vergleichmäßigung der solaren Strahlung durch Reflexionen erreichen. Auch die gegenseitige thermische Bestrahlung von Absorberelementen führt zu einer Vergleichmäßigung der Temperaturen in der Absorberstruktur.

Der Hohlraum kann auch an einem Wärmespeicher angeordnet sein. Beispielsweise weist er wärmespeichernde Wände auf. Dadurch werden Temperaturtransienten in der Absorberstruktur beispielsweise wegen Wolkenbedeckung abgeschwächt. Die Temperaturstrahlung des Wärmespeichers kann eine fehlende solare Einstrahlung mindestens teilweise kompensieren. Dadurch lässt sich die Lebensdauer der Absorberstruktur erhöhen und die Regelbarkeit (insbesondere im Zusammenhang mit einer Gasturbine) verbessern.

Insbesondere ist der Hohlraum wärmegedämmt, um eine effektive Temperaturvergleichmäßgigung in der Absorberstruktur zu erreichen.

Günstig ist es, wenn der Hohlraum reflektierende Innenwände aufweist. Die Innenwände können reflektierend bezüglich solarer Strahlung und/oder Infrarot-Strahlung ausgebildet sein. Dadurch lässt sich eine gleichmäßige Beaufschlagung der Absorberstruktur mit solarer Strahlung bzw. Infrarot-Strahlung erreichen.

Günstig ist es, wenn der Hohlraum eine Strahlungs-Durchtrittsöffnung aufweist. Diese weist insbesondere eine Fläche auf, welche kleiner ist als eine Einhüllfläche der Absorberstruktur. Dadurch lässt sich eine Temperaturvergleichmäßigung an der Absorberstruktur erreichen.

Es ist vorteilhaft, wenn die Strahlungs-Durchtrittsöffnung bezüglich Größe und/oder Form variabel einstellbar ist. Dadurch ist eine Anpassung an unterschiedliche Einstrahlungsbedingungen zur Optimierung des Wirkungsgrades möglich.

Insbesondere ist an der Strahlungs-Durchtrittsöffnung ein Glaselement oder Glasvorbau angeordnet, um Verluste durch thermische Abstrahlung und Konvektion zu verringern. Das Glaselement bzw. der Glasvorbau ist beispielsweise scheibenförmig oder kuppelförmig.

Bei einer kuppelförmigen Ausbildung lassen sich Reflexionsverluste verringern. Es kann auch eine Antireflexionsbeschichtung vorgesehen sein.

Die eingangs genannte Aufgabe wird erfindungsgemäß ferner dadurch gelöst, dass an einem Absorberrohr mindestens eine Einblasdüse zur Eindüsung eines Gases oder eines Fluids angeordnet ist.

Durch Eindüsung eines fluiden Mediums lässt sich beispielsweise in einem stark belasteten Absorberrohr die Temperatur reduzieren und/oder eine ungleichmäßige Temperaturverteilung lässt sich in unterschiedlichen Absorberrohren ausgleichen. Das eingedüste Gas oder die eingedüste Flüssigkeit kann durch sensible Kühlung und/oder durch Verdampfungskühlung zur Temperaturhomogenisierung am Absorberrohr beitragen. Beispielsweise wird ein Wärmeübertragungsfluid wie Luft eingedüst oder es wird ein anderer Stoff wie beispielsweise Wasser eingedüst.

Die Anordnung einer Einblasdüse ist derart, dass sich der optimale Effekt gibt. Die Eindüsung kann an einer oder mehreren Stellen eines Absorberrohrs erfolgen. Sie kann in Strömungsrichtung oder entgegen der Strömungsrichtung des Wärmeübertragungsfluids in dem Absorberrohr erfolgen.

Die eingangs genannte Aufgabe wird ferner erfindungsgemäß dadurch gelöst, dass Absorberrohre gebogen sind. Durch die Biegung können unterschiedliche Wärmedehnungen entlang eines Absorberrohrs kompensiert werden.

Beispielsweise sind Absorberrohr zweidimensional gebogen, das heißt sie weisen eine Längserstreckungslinie auf, welche nicht-linear ist, welche jedoch in einer Ebene liegt. Eine solche Biegung lässt sich auf einfache Weise herstellen.

Es kann auch vorgesehen sein, dass Absorberrohre dreidimensional gebogen sind. Die Längserstreckungslinie eines solchen Absorberrohrs ist eine Raumkurve.

Beispielsweise sind die Absorberrohre an eine ringförmige Fluidabführungseinrichtung und/oder Fluidzuführungseinrichtung angeschlossen. Wenn eine Längserstreckungslinie von Fluidrohren eine Raumkurve ist, dann lässt sich eine Absorberstruktur mit großer Absorptionsfläche bilden, welche gewölbt ist. Zur Zuführung von Fluid und zur Abführung von Fluid kann ein ringförmiges Rohr vorgesehen werden.

Insbesondere ist eine Einhüllende der Absorberfläche der Absorberrohre nicht eben. Es lässt sich so eine optimierte Ausgestaltung und insbesondere Anpassung an die Einstrahlungsbedingungen erreichen.

Der Erfindung liegt ferner die Aufgabe zugrunde, ein Verfahren zur Steuerung und/oder Regelung der Massenstromverteilung und/oder zum Temperaturausgleich an einem Solarstrahlungsempfänger mit Absorberrohren, durch welche ein Wärmeübertragungsfluid bereitzustellen, mittels welchem eine hohe Austrittstemperatur für das Wärmeübertragungsfluid erreicht wird.

Diese Aufgabe wird erfindungsgemäß dadurch gelöst, dass eine Flüssigkeit und/oder ein Gas in ein Absorberrohr eingedüst ist und/oder einstellbare Strömungsventile eingestellt werden und/oder Wärmeübertragungsfluid aus unterschiedlichen Absorberrohren gemischt wird und das Mischungsfluid auf unterschiedliche Absorberrohre weiterverteilt wird.

Durch die Eindüsung von Flüssigkeit und/oder Gas lässt sich der Massenstrom beeinflussen. Es ist auch alternativ oder zusätzlich möglich, durch Eindüsung insbesondere eines kälteren Mediums eine Einlasstemperatur am Absorberrohr zu erniedrigen. Beispielsweise lässt sich durch gezielte Eindüsung des Gases oder der Flüssigkeit in höher belasteten Absorberrohren eine homogenere Temperaturverteilung erreichen.

Durch die Einstellung der Strömungswiderstände lässt sich die Massenstromverteilung in Absorberrohren definiert steuern bzw. regeln. Beispielsweise können höher belastete Absorberrohre mit einem höheren Massenstrom beaufschlagt werden und damit mit besser gekühlt werden.

Die Strömungswiderstände sind insbesondere am Eintritt und/oder Austritt von Absorberrohren angeordnet.

Durch die Zwischenvermischung von Wärmeübertragungsfluid lässt sich eine Temperaturhomogenisierung für das Wärmeübertragungsfluid erreichen, welches weiter durch Absorberrohre geführt wird. Dadurch werden Belastungsspitzen für Absorberrohre vermieden.

Die nachfolgende Beschreibung bevorzugter Ausführungsformen dient im Zusammenhang mit der Zeichnung der näheren Erläuterung der Erfindung. Es zeigen:
- Figur 1: eine schematische perspektivische Ansicht eines ersten Ausführungsbeispiels einer Solarstrahlungsempfängers;
- Figur 2: eine schematische perspektivische Darstellung eines zweiten Ausführungsbeispiels eines Solarstrahlungsempfängers;
- Figur 3: eine Schnittansicht des Solarstrahlungsempfängers gemäß Figur 2;
- Figur 4: eine schematische Schnittansicht eines dritten Ausführungsbeispiels eines Solarstrahlungsempfängers;
- Figur 5: eine Schnittansicht eines vierten Ausführungsbeispiels eines Solarstrahlungsempfängers;
- Figur 6: eine perspektivische Durchschnittsdarstellung eines fünften Ausführungsbeispiels eines Solarstrahlungsempfängers;

- Figur 7: eine Teilschnittansicht eines sechsten Ausführungsbeispiels;
- Figur 8: eine Teilschnittansicht eines siebten Ausführungsbeispiels;
- Figur 9: eine Teilschnittansicht eines achten Ausführungsbeispiels;
- Figur 10: ein Ausführungsbeispiel eines Absorberrohrs;
- Figur 11: eine perspektivische Darstellung eines neunten Ausführungsbeispiels eines Solarstrahlungsempfängers;
- Figur 12: eine teilperspektivische Ansicht eines zehnten Ausführungsbeispiels eines Solarstrahlungsempfängers;
- Figur 13: ein weiteres Ausführungsbeispiel eines Absorberrohrs;
- Figur 14: eine Teildarstellung eines Solarstrahlungsempfängers, welcher aus Absorberrohren gemäß Figur 13 zusammengesetzt ist;
- Figur 15: ein weiteres Ausführungsbeispiel eines Absorberrohrs;
- Figur 16: eine Teildarstellung eines Solarstrahlungsempfängers, welcher aus Absorberrohren gemäß Figur 15 zusammengesetzt ist;
- Figuren 17(a), (b), (c), (d): eine Variante des Ausführungsbeispiels gemäß Figur 6 mit unterschiedlichen Größen/Formen einer Strahlungs-Durchtrittsöffnung.

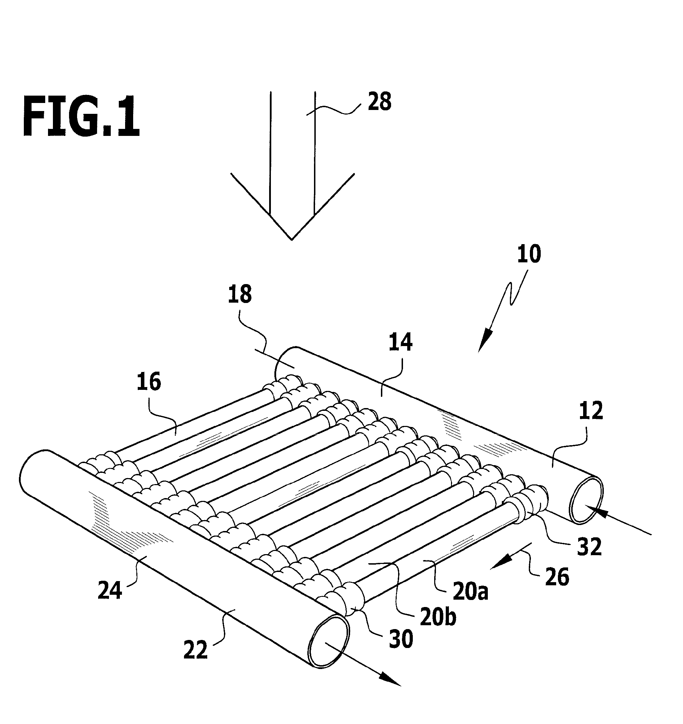

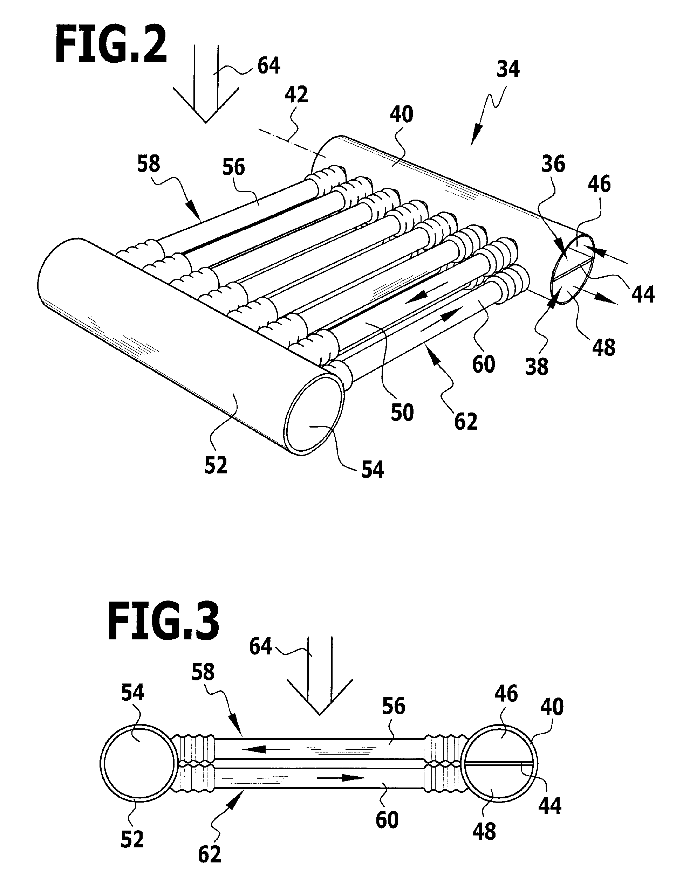

Ein erstes Ausführungsbeispiel eines erfindungsgemäßen Solarstrahlungsempfängers, welches in Figur 1 gezeigt und dort mit 10 bezeichnet ist, umfasst eine Fluidzuführungseinrichtung 12. Diese ist beispielsweise durch ein gerades Rohr 14 gebildet. Dieses Rohr 14 dient als Verteilerrohr zur Verteilung von zugeführtem Wärmeübertragungsfluid (insbesondere Luft) auf eine Mehrzahl von Absorberrohren 16.

Die Fluidzuführungseinrichtung 12 mit ihrem Rohr 14 erstreckt sich in einer Erstreckungsrichtung 18. Die Absorberrohre 16 sind quer und insbesondere senkrecht zu dieser Erstreckungsrichtung 18 orientiert. Die Absorberrohre 16 sind parallel zueinander orientiert, wobei benachbarte Absorberrohre 20a, 20b beabstandet sind.

Die Absorberrohre 16 weisen einen kleineren Innenquerschnitt auf als das Rohr 14 der Fluidzuführungseinrichtung 12.

Die Absorberrohre 16 sind mit der Fluidzuführungseinrichtung 12 verbunden, so dass Wärmeübertragungsfluid in Teilströme aufgeteilt über diese in die Absorberrohre 16 einkoppelbar ist.

Die Absorberrohre 16 münden in eine Fluidabführungseinrichtung 22, welche ein Sammelrohr 24 umfasst. Dieses Sammelrohr 24 ist parallel beabstandet zu dem Rohr 14. Über die Fluidabführungseinrichtung 22 lässt sich in den Absorberrohren 16 erhitztes Wärmeübertragungsfluid sammeln und abführen; das Wärmeübertragungsfluid ist über die Fluidzuführungseinrichtung 12 in die Absorberrohre 16 eingekoppelt. Bei der Strömung in den Absorberrohren 16 in einer Strömungsrichtung 26 (welche parallel zur Erstreckungsrichtung der Absorberrohre 16 ist) wird es durch Solarstrahlung 28 erhitzt, und über die Fluidabführungseinrichtung 22 abgeführt.

Bei den Absorberrohren 16 kann es sich beispielsweise um gezogene Rohre ohne Schweißnaht handeln. Es ist auch möglich, dass die Rohre beispielsweise aus Blech über eine Längsschweißnaht hergestellt werden.

Es ist möglich, dass die Absorberrohre auf ihrer Strömungsinnenseite eine strukturierte Oberfläche zur Erhöhung des Turbulenzgrades aufweisen; bei Erhöhung des Turbulenzgrads lässt sich der Wärmeübergang verbessern. Die Strukturierung kann beispielsweise durch mechanische Bearbeitung oder Beschichtung hergestellt werden.

Es ist auch möglich, dass nur Teilbereiche von Absorberrohren strukturiert sind. Strukturierungen mit Erhöhung des Turbulenzgrads führen zu einer Steigerung des Wärmeübergangs mit einhergehendem erhöhten Druckverlust. Es kann vorteilhaft sein, die Strukturierung so auszubilden, dass die Erhöhung des Wärmeübergangs in kritischen Bereichen eines Absorberrohrs erfolgt. Es ist beispielsweise auch möglich, dass die Strukturierung nur in solchen Bereichen eines Absorberrohrs vorgesehen ist, in welchen die abzuführende Leistung am höchsten ist.

Beispielsweise werden für die Absorberrohre 16 Mehrschichtrohre eingesetzt, wie sie in der EP 1 537 921 A1 beschrieben sind.

Die Absorberrohre 16 sind einlagig zwischen der Fluidzuführungseinrichtung 12 und der Fluidabführungseinrichtung 22 angeordnet und liegen insbesondere in einer Ebene; die Mittelebenen der Absorberrohre 16 liegen auf einer gemeinsamen Ebene.

Es kann vorgesehen sein, dass die Absorberrohre 16 eine oder mehrere Kompensationseinrichtungen 30 zur (Längen-)Dehnungskompensation aufweisen. Grundsätzlich ist es so, dass die Temperaturbelastung eines Absorberrohrs 16 zu einer Längendehnung führt. Unterschiedliche Einstrahlungsstärken können dabei zu unterschiedlichen Temperaturen in unterschiedlichen Absorberrohren 16 führen und damit zu unterschiedlichen Dehnungen. Durch die Kompensationseinrichtung 30 an Absorberrohren 16 lassen sich solche Dehnungen in ihrer Auswirkung auf den Solarstrahlungsempfänger 10 kompensieren. Insbesondere weist jedes Absorberrohr 16 mindestens eine Kompensationseinrichtung 30 auf. Vorzugsweise weist jedes Absorberrohr 16 an oder in der Nähe eines der Fluidzuführungseinrichtung 12 zugewandten Endes eine Kompensationseinrichtung 30 und an oder in der Nähe des gegenüberliegenden Endes (welches der Fluidabführungseinrichtung 22 zugewandt ist) eine entsprechende Kompensationseinrichtung auf.

Eine Kompensationseinrichtung 30 ist beispielsweise dadurch gebildet, dass Bereiche 32 mit unterschiedlichem Durchmesser (und damit unterschiedlichem Querschnitt) vorgesehen sind. Eine solche Kompensationseinrichtung 30 hat dadurch eine balgförmige Gestalt.

Eine Kompensationseinrichtung 30 kann an einem Absorberrohr 16 durch mechanische Bearbeitung hergestellt werden (wie beispielsweise Hydroforming) oder beispielsweise angeschweißt werden.

Es ist auch grundsätzlich möglich, dass sich eine Kompensationseinrichtung 30 über einen großen Teil der Länge eines Absorberrohrs 16 oder über dessen ganze Länge zwischen der Fluidzuführungseinrichtung 12 und der Fluidabführungseinrichtung 22 erstreckt.

Es ist grundsätzlich auch möglich (in der Zeichnung nicht gezeigt), dass ein Absorberrohr 16 über seine Länge einen variierenden (Innen-)Querschnitt aufweist. An Bereichen mit kleinerem Innenquerschnitt erhält man eine höhere Strömungsgeschwindigkeit des Fluids und damit einen erhöhten Wärmeübergang. Durch entsprechende Querschnittsgestaltung lässt sich deshalb an bestimmten Bereichen eines Absorberrohrs 16 der Wärmeübergang gezielt erhöhen. Dies lässt sich so durchführen, dass der Gesamtdruckverlust nicht zu groß ist.

Beispielsweise kann ein Absorberrohr 16 einen Bereich mit einem sich erweiternden Verlauf und insbesondere konischen Verlauf aufweisen. Bei einer Ausführungsform erstreckt sich der konischer Verlauf über die ganze Länge eines solchen Absorberrohrs 16 zwischen der Fluidzuführungseinrichtung 12 und der Fluidabführungseinrichtung 22, wobei der große Querschnitt an der Fluidzuführungseinrichtung 12 liegt und der kleine Querschnitt an der Fluidabführungseinrichtung 22. Dadurch lässt sich die Strömungsgeschwindigkeit und damit der Wärmeübergang in der Strömungsrichtung 26 erhöhen. Weiterhin wird der Temperaturgradient zwischen Fluid und einer Wand des entsprechenden Absorberrohrs 16 reduziert.

Ein konisches Rohr kann beispielsweise aus einem trapezförmigen Blech durch Schweißung hergestellt werden. Es ist beispielsweise auch möglich, aus einem nahtlosen Rohr durch Umformung ein konisches Rohr herzustellen.

Bei einem zweiten Ausführungsbeispiel, welches in Figur 2 gezeigt und dort mit 34 bezeichnet ist, ist eine Fluidzuführungseinrichtung 36 vorgesehen sowie eine Fluidabführungseinrichtung 38. Die Fluidzuführungseinrichtung 36 und die Fluidabführungseinrichtung 38 sind an einem Rohr 40 gebildet, welches sich in einer Erstreckungsrichtung 42 erstreckt.

Das Rohr 40 weist beispielsweise einen Kreisquerschnitt auf. In dem Rohr 40 ist eine Trennwand 44 angeordnet, welche die Fluidzuführungseinrichtung 36 und die Fluidabführungseinrichtung 38 voneinander trennt; die Trennwand 44 bildet eine erste Kammer 46 und eine zweite Kammer 48, wobei die erste Kammer 46 als Verteilerkammer für die Fluidzuführung zu Absorberrohren 50 dient und die zweite Kammer als Fluidsammler zur Abführung von Fluid aus den Absorberrohren 50 dient.

Parallel beabstandet zu dem Rohr 40 ist ein Zwischenverteilungsrohr 52 angeordnet, in welchem ein Zwischenverteilungsraum 54 gebildet ist. Dieser ist vorzugsweise so angeordnet, dass er Solarstrahlung nicht ausgesetzt ist. Dadurch lässt sich die Wärmebelastung des Zwischenverteilungsrohrs 52 gering halten.

Von der ersten Kammer 46 laufen Absorberrohre 56 mit einer Orientierung senkrecht zur Erstreckungsrichtung 42. Diese Absorberrohre 56 münden in den Zwischenverteilungsraum 54 an dem Zwischenverteilungsrohr 52.

Es ist dabei eine erste Lage Absorberrohre 58 vorgesehen. Die Absorberrohre 56 der ersten Lage 58 liegen bezüglich ihrer Mittelebene auf einer gemeinsamen Ebene. Diese Ebene ist beabstandet zu der Trennwand 44.

Über die Absorberrohre 56 der ersten Lage 58 wird Wärmeübertragungsfluid von der ersten Kammer 46 (und damit von der Fluidzuführungseinrichtung 36) zu dem Zwischenverteilungsraum 54 geführt.

Es sind ferner Absorberrohre 60 vorgesehen, welche in einer zweiten Lage 62 liegen. Die Absorberrohre 60 der zweiten Lage 62 liegen bezüglich ihrer Mittelebene auf einer gemeinsamen Ebene, welche beabstandet zu der Ebene der ersten Lage 58 ist und beabstandet zu der Trennwand 44 ist. Die Mittelebene der Trennwand liegt zwischen der Ebene der ersten Lage 58 und der Ebene der zweiten Lage 62.

Über die Absorberrohre 60 lässt sich Wärmeübertragungsfluid von dem Zwischenverteilungsraum 54 in die zweite Kammer 48 und damit zu der Fluidabführungseinrichtung 38 führen.

Bezogen auf die Solarstrahlungsrichtung 64 liegt die erste Lage 58 vor der zweiten Lage 62.

Es kann vorgesehen sein, dass die Absorberrohre 60 der zweiten Lage 62 bezogen auf die Absorberrohre 56 der ersten Lage 58 in einer Richtung parallel zur Erstreckungsrichtung 42 versetzt angeordnet sind. Diese Anordnung ist vorzugsweise derart, dass bezogen auf die Solarstrahlungsrichtung 64 die Absorberrohre 60 der zweiten Lage 62 zumindest teilweise durch Absorberrohre 56 der ersten Lage 58 abgedeckt sind.

Der Zwischenverteilungsraum 54 dient zur Zusammenführung der Teilmassenströme an Fluid, welche über die Fluidzuführungseinrichtung 36 auf die Absorberrohre 56 verteilt wurde. In dem Zwischenverteilungsraum 54 kann eine Fluidvermischung durchgeführt werden. Das Mischungsfluid wird dann auf die Absorberrohre 60 der zweiten Lage 62 verteilt. Es lassen sich dadurch unterschiedliche Temperaturen in den Absorberrohren 56 mindestens teilweise ausgleichen bzw. unterschiedliche Rohrtemperaturen wirken sich über die Zwischenvermischung in dem Zwischenverteilungsraum 54 nicht so stark aus.

Durch das Vorsehen der ersten Lage 58 und der zweiten Lage 62 lässt sich die wärmeübertragende Fläche erhöhen. Ferner lassen sich die Absorberrohre 60, in welchen höhere Temperaturen herrschen, durch die Absorberrohre 56 teilweise verdecken. Dadurch wiederum lässt sich die Wärmebelastung verringern bei gleichzeitiger Erhöhung des Wirkungsgrads des Solarstrahlungsempfängers 34.

Es ist auch möglich, dass mehr als zwei Lagen an Absorberrohren vorgesehen werden.

Die Absorberrohre 56, 60 können mit Kompensationseinrichtungen 30 versehen sein, wie anhand des ersten Ausführungsbeispiels 10 beschrieben.

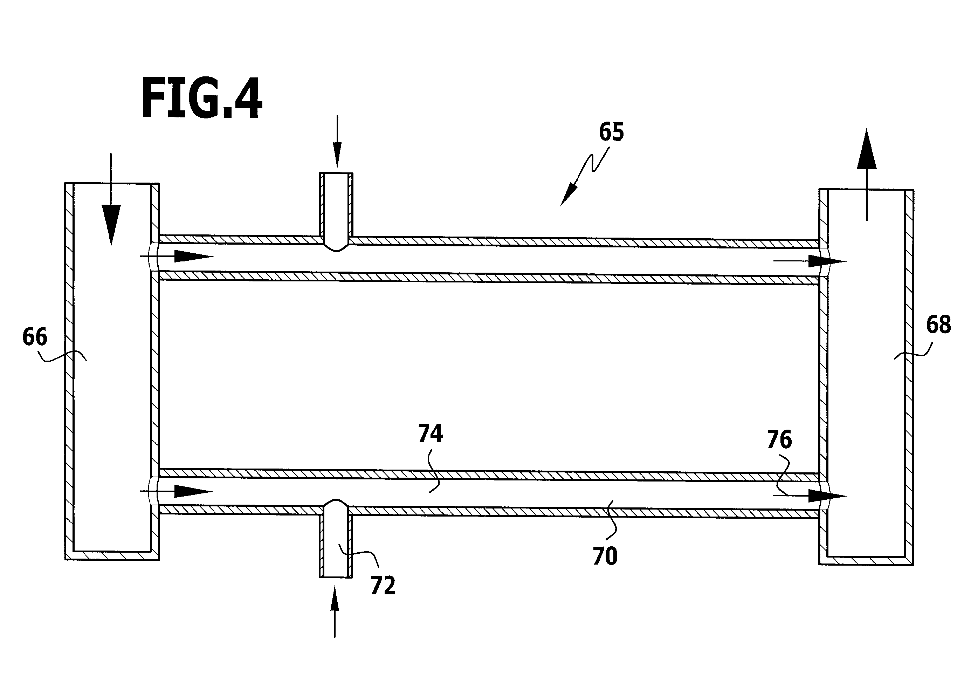

Bei einem dritten Ausführungsbeispiel, welches in Figur 4 schematisch gezeigt und dort mit 65 bezeichnet ist, sind zwischen einer Fluidzuführungseinrichtung 66 und einer Fluidabführungseinrichtung 68 Absorberrohre 70 angeordnet. An einem Absorberrohr 70 ist mindestens eine Einblasdüse 72 angeordnet, über die sich eine Flüssigkeit oder ein Gas in einem Innenraum 74 des Absorberrohrs eindüsen lässt.

Über die Eindüsung lässt sich der Massenstrom des Fluids in den Absorberrohren 70 steuern bzw. regeln. Durch gezielte Eindüsung insbesondere in höher belasteten Absorberrohren 70 lassen sich ungleichmäßige Rohrtemperaturen ausgleichen. Insbesondere lässt sich über das Einblasen einer Flüssigkeit oder eines Gases eine Kühlung erreichen. Die Kühlung kann durch sensible Kühlung und/oder durch Verdampfungskühlung erfolgen.

Beispielsweise wird, wenn Luft als Wärmeübertragungsfluid durch die Absorberrohre 70 geführt wird, an einer oder mehreren Stellen Luft abgezweigt (beispielsweise vor einem Rekuperator). Es lässt sich auch ein anderes Fluid wie Wasser oder ein anderes Gas eindüsen.

Es ist dabei möglich, dass an einem Absorberrohr 70 an einer oder mehreren Stellen eine Eindüsung erfolgt. Die Eindüsung kann an allen oder einzelnen Absorberrohren 70 erfolgen. Sie kann in Strömungsrichtung 76 oder entgegen der Strömungsrichtung erfolgen.

Die Einblasdüsen 72 können an Absorberrohren 16 des Strahlungsempfängers 10 oder Absorberrohren 56, 60 des Strahlungsempfängers 34 angeordnet sein.

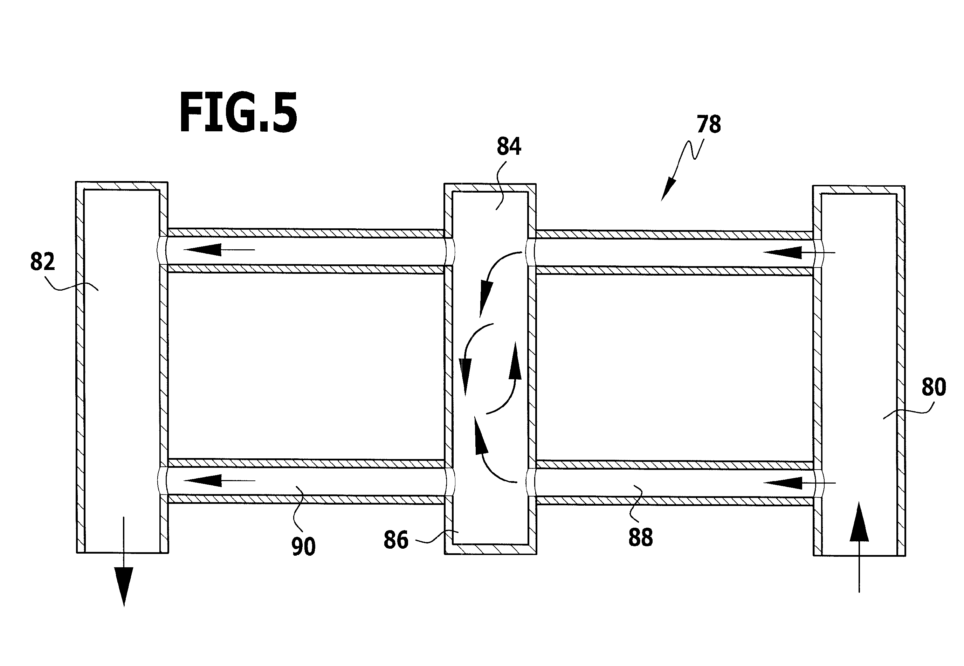

Bei einem vierten Ausführungsbeispiel, welches in Figur 5 in Schnittdarstellung schematisch gezeigt ist und dort mit 78 bezeichnet ist, ist eine Fluidzuführungseinrichtung 80 und eine Fluidabführungseinrichtung 82 vorgesehen. Diese sind insbesondere durch entsprechende Rohre gebildet, die parallel zueinander orientiert sind.

Zwischen der Fluidzuführungseinrichtung 80 und der Fluidabführungseinrichtung 82 ist (mindestens) ein Zwischenverteilungsraum 84 angeordnet, welcher beispielsweise durch ein an beiden Enden geschlossenes Rohr 86 gebildet ist. Dieses Rohr 86 ist insbesondere parallel zur Fluidzuführungseinrichtung 80 und Fluidabführungseinrichtung 82 orientiert.

Absorberrohre 88 liegen zwischen der Fluidzuführungseinrichtung 80 und dem Zwischenverteilungsraum 84. Sie münden in den Zwischenverteilungsraum 84. Ferner liegen Absorberrohre 90 zwischen dem Zwischenverteilungsraum 84 und der Fluidabführungseinrichtung 82; sie münden in die Fluidabführungseinrichtung 82.

In dem Zwischenverteilungsraum 84 kann sich Wärmeübertragungsfluid, welches von unterschiedlichen Absorberrohren 88 in Teilströmen eingekoppelt wird, vermischen. Dieses Mischungsfluid wird dann wieder in Teilströme aufgeteilt, welche über Absorberrohre 90 der Fluidabführungseinrichtung 82 zugeführt werden. Durch die Zwischenvermischung von Fluid in dem Zwischenverteilungsraum 84 lassen sich Temperaturunterschiede beispielsweise aufgrund unterschiedlicher Bestrahlung von Absorberrohren 88 ausgleichen. Den Absorberrohren 90 wird Fluid zugeführt, welches auf einem gleichmäßigeren Temperaturniveau ist, als wenn das Fluid direkt von der Fluidzuführungseinrichtung 88 zu der Fluidabführungseinrichtung 82 geführt wird.

Es ist grundsätzlich möglich, dass zwischen der Fluidzuführungseinrichtung 80 und der Fluidabführungseinrichtung 82 eine Mehrzahl von Zwischenverteilungsräumen 84 angeordnet sind.

Durch eine oder mehrere Zwischenverteilungsräume lassen sich relativ hohe Austrittstemperaturen beim Austritt des Wärmeübertragungsfluids in die Fluidabführungseinrichtung 82 erreichen; durch den Temperaturausgleich durch die Zwischenvermischung muss die Einstrahlleistung so angepasst werden, dass das höchstbelastete Absorberrohr nicht zu heiß wird; durch die Zwischenvermischung lässt sich die Belastung über den Fluidtemperaturausgleich besser verteilen, so dass wiederum höhere Austrittstemperaturen erreichbar sind.

Ein oder mehrere Zwischenverteilungsräume 84 können an den Solarstrahlungsempfängern 10, 34 oder 65 angeordnet sein.

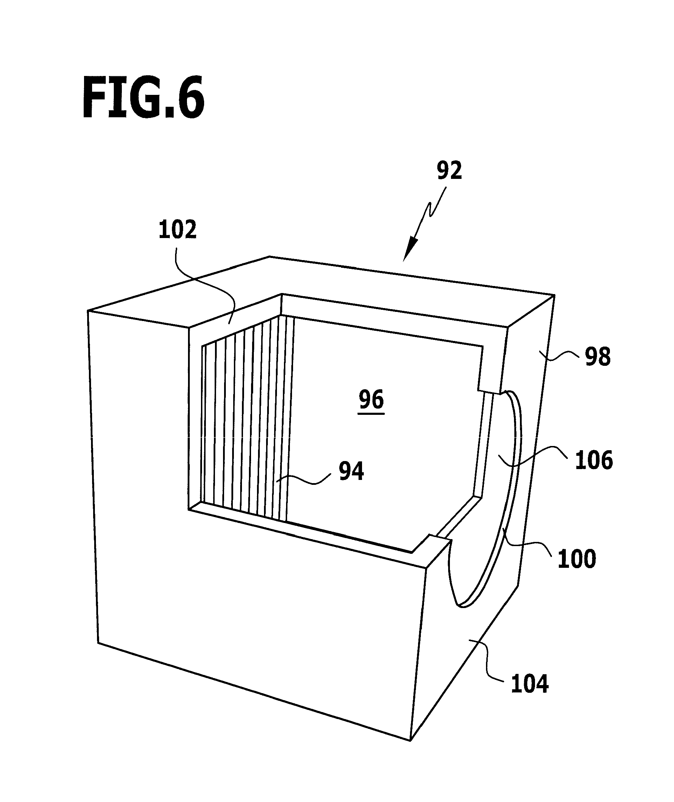

Bei einem fünften Ausführungsbeispiel, welches in Figur 6 schematisch in einer Teilansicht gezeigt und dort mit 92 bezeichnet ist, ist eine Absorberrohrstruktur 94 in einem Hohlraum 96 angeordnet.

Die Absorberstruktur 94 kann so ausgebildet sein wie oben anhand der Figuren 1 bis 5 beschrieben.

Der Hohlraum 96 ist in einem Gehäuse 98 gebildet, welches gegenüber dem Außenraum wärmegedämmt ist.

Das Gehäuse 98 weist eine Durchtrittsöffnung 100 für Solarstrahlung auf. Die Absorberstruktur 94 ist dieser Durchtrittsöffnung 100 gegenüberliegend angeordnet. Beispielsweise ist sie an einer Wand 102 des Gehäuses 98 angeordnet bzw. dieser Wand 102 zuweisend angeordnet, welche einer Wand 104 gegenüberliegt (insbesondere parallel gegenüberliegt), an welcher die Durchtrittsöffnung 100 gebildet ist. Es können auch weitere Absorberrohre bzw. Absorberstrukturen an anderen Wänden des Gehäuses 98 angeordnet sein.

Die Durchtrittsöffnung 100 ist vorzugsweise durch ein Glaselement 106 (insbesondere Quarzglaselement oder Borsilicatglaselement) geschlossen.

Der Hohlraum 96 bildet eine Kavität. Solarstrahlung tritt durch das Glaselement 106 in den Hohlraum 96 ein. Die Einhüllfläche der Absorberstruktur 94 ist vorzugsweise größer als die Querschnittsfläche der Durchtrittsöffnung 100. Es ist dann die absorbierende Fläche größer als die abstrahlende Fläche. Dadurch kann der Wärmeübergang in der Absorberstruktur 94 geringer ausfallen. Dadurch wiederum lässt sich ein niedrigerer Druckverlust erreichen.

Vorzugsweise sind Innenwände des Gehäuses 68, welche in den Hohlraum 96 weisen, reflektierend ausgestaltet. Es lässt sich dadurch in dem Hohlraum 96 eine "Vergleichmäßigung" von Strahlung durch Reflexion erhalten. Die Innenwände können reflektierend bezüglich Solarstrahlung und/oder Infrarot-Strahlung sein.

Die Innenwände können auch als Wärmespeicher ausgebildet sein, um eine Pufferwirkung bereitzustellen.

Weiterhin lässt sich eine Vergleichmäßigung der Temperaturen in der Absorberstruktur 94 erreichen, was auf die gegenseitige thermische Bestrahlung von Absorberrohren der Absorberstruktur 94 zurückzuführen ist.

Der Hohlraum 96 kann eine Hohlquadergestalt aufweisen. Auch andere geometrische Ausgestaltungen wie beispielsweise Hohlkugel, Hohlzylinder oder Hohlparaboloid sind möglich.

Es ist auch möglich, dass vor dem Hohlraum 96 ein Sekundärkonzentrator zur Bündelung der Solarstrahlung auf die Durchtrittsöffnung 100 angeordnet ist (in der Zeichnung nicht gezeigt).

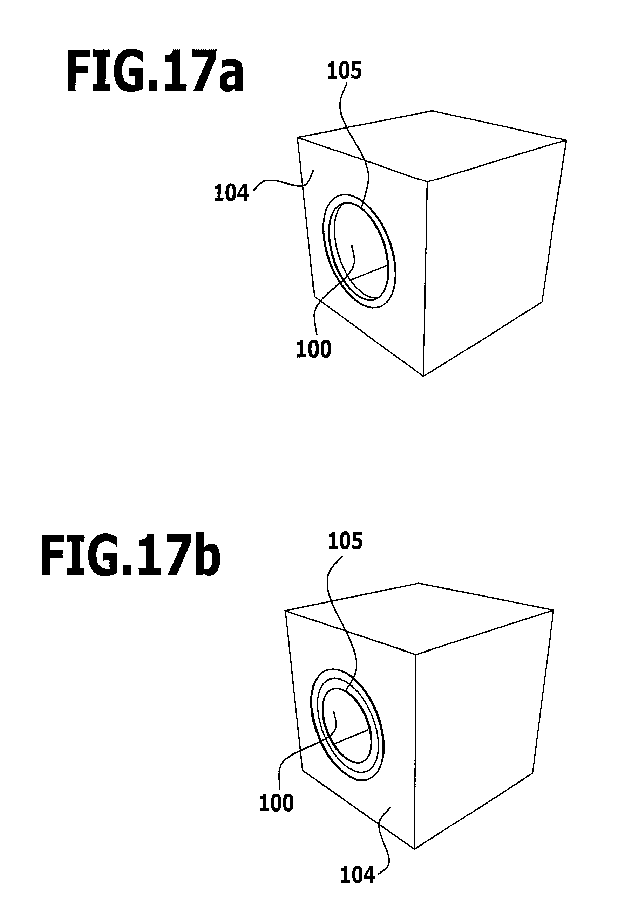

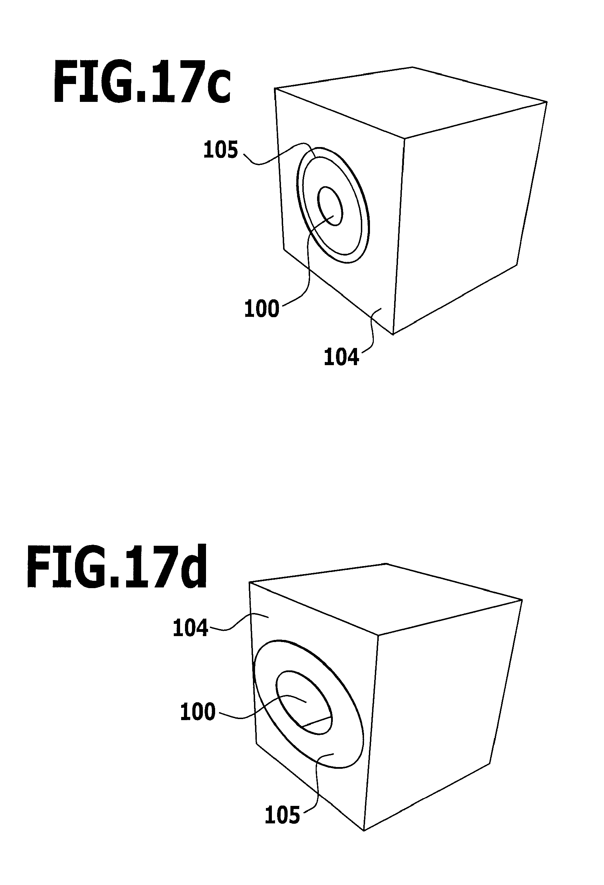

Die Durchtrittsöffnung 100 kann in ihrer Form und/oder Größe variabel sein (Figuren 17(a), (b), (c), (d)). Dazu ist beispielsweise an der Wand 104 eine Verstelleinrichtung 105 angeordnet, in welcher die Durchtrittsöffnung 100 gebildet ist. Durch die Verstelleinrichtung 105 ist der Bereich zwischen der Durchtrittsöffnung 100 und der Wand 104 abgedeckt, so dass Solarstrahlung nur durch die Durchtrittsöffnung 100 in den Hohlraum 96 gelangen kann. Die Form und/oder Größe der Durchtrittsöffnung 100 ist an der Verstelleinrichtung 105 einstellbar. Die Einstellbarkeit ist beispielsweise durch plastische Verformbarkeit der Verstelleinrichtung 105 realisiert.

Durch die Variabilität der Durchtrittsöffnung 100 ist eine Anpassung an unterschiedliche Einstrahlungsbedingungen zur Optimierung des Wirkungsgrades ermöglicht.

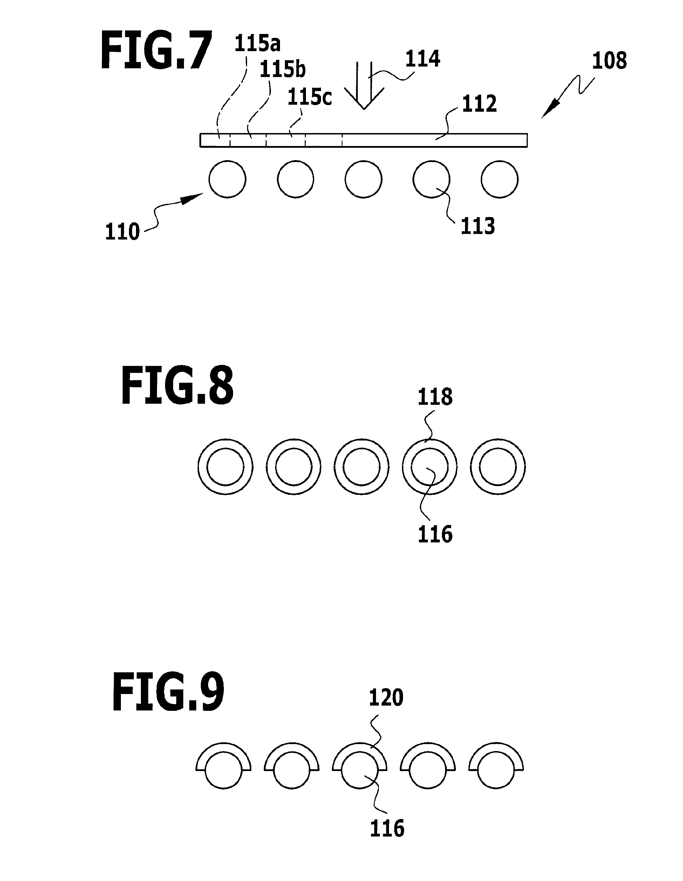

Einer Absorberstruktur, welche eine Mehrzahl von Absorberrohren umfasst, kann ein Glasvorbau beispielsweise aus Quarzglas oder Borsilicatglas zugeordnet sein (Figuren 7 bis 9). Dadurch lassen sich Verluste durch thermische Abstrahlung und Konvektion verringern; der Glasvorbau ist vor der Absorberstruktur (bezogen auf die Solarstrahlungsrichtung) angeordnet. Das Glas des Glasvorbaus lässt die Solarstrahlung fast vollständig passieren, während es Infrarotstrahlung, welche von der Absorberstruktur kommt, mindestens teilweise absorbiert. Diese Wärme kann (nur) durch Wärmeleitung auf die Außenseite des Glasvorbaus gelangen, wobei sie durch Strahlung oder Konvektion abgeführt wird. Da jedoch die Wärmeleitfähigkeit von Glas relativ gering ist, ist der entsprechende Wärmeverlust gering.

Vorzugsweise ist der Glasvorbau mit einer Anti-Reflexionsbeschichtung versehen, um Reflexionsverluste klein zu halten.

Bei einem Ausführungsbeispiel, welches in Figur 7 schematisch gezeigt und dort mit 108 bezeichnet ist, ist einem Rohrregister 110 aus einer Mehrzahl von parallel angeordneten Absorberrohren 113 eine Glasplatte 112 als Glasvorbau zugeordnet. Eingezeichnet ist auch die Solarstrahlungsrichtung 114. Die Glasplatte 112 als Glasvorbau deckt insbesondere alle Absorberrohre 113 zu der Solarstrahlungsrichtung 114 hin ab.

Es ist auch grundsätzlich möglich, dass jedem Absorberrohr 113 oder einer Gruppe von Absorberrohren 113 jeweils eine eigene Glasplatte zugeordnet ist.

Anstatt einer Glasplatte kann auch eine Mehrzahl von nebeneinander angeordneten flachen Glasstreifen vorgesehen sein, wobei die Glasstreifen voneinander getrennt sind. Diese sind in Figur 7 durch die Bezugszeichen 115a, 115b usw. angedeutet. Eine solche Glasstreifen-Anordnung ist kostengünstiger herstellbar und bruchstabiler als eine einstückige Ausführung.

Beispielsweise ist es auch möglich, wie in Figur 8 gezeigt, dass Absorberrohre 116 innerhalb von Glasrohren 118 angeordnet sind. Die Glasrohre 118 umgeben die entsprechenden Absorberrohre 116 vollständig.

Beispielsweise ist es auch möglich, wie in Figur 9 gezeigt, dass Glasrohrteile 120, welche insbesondere in der Form von Glashalbrohren ausgebildet sind, die Absorberrohre 116 nur teilweise umgeben und/oder vor diesen angeordnet sind. Die Glashalbrohre können miteinander verbunden sein oder getrennt voneinander sein. Beispielsweise ist ein Glasvorbau durch eine Mehrzahl von parallel ausgerichteten Glashalbrohren gebildet, wobei benachbarte Glashalbrohre miteinander verbunden sind. Durch die Verwendung von Glashalbrohren ist die Reflexion von Solarstrahlung verringert und die mechanische Stabilität erhöht.

Ein Glasvorbau wie oben beschrieben kann auch an der Durchtrittsöffnung 100 anstatt des Glaselements 106 angeordnet sein.

Es ist grundsätzlich möglich, wie beispielsweise anhand der Ausführungsbeispiele gemäß den Figuren 1 und 2 gezeigt, dass die Absorberrohre eine lineare Erstreckungsrichtung aufweisen.

Es ist auch möglich, dass Absorberrohre durch einen oder mehrere Biegebereiche eine nicht-lineare Erstreckung aufweisen. Durch Biegungen können unterschiedliche Wärmedehnungen von Absorberrohren kompensiert werden. Weiterhin ist es möglich, durch entsprechende Rohrgeometrien Absorberstrukturen mit entsprechender räumlicher Gestalt herzustellen.

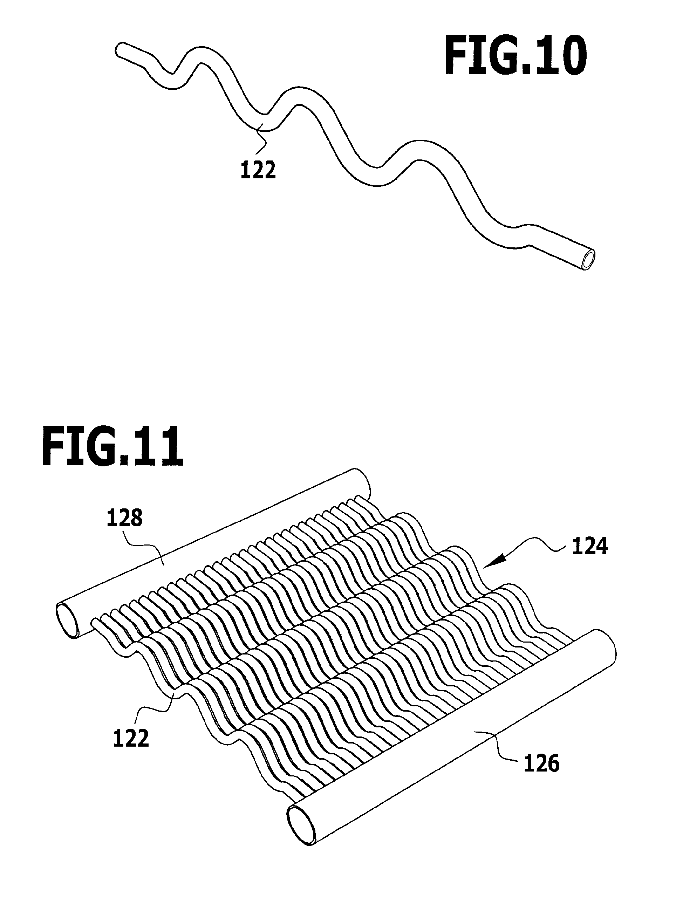

Es ist beispielsweise möglich, wie in den Figuren 10 und 11 gezeigt, ein Absorberrohr 122 so auszugestalten, insbesondere durch Biegung, dass es eine ebene Mittelfläche aufweist mit nicht-linearer Erstreckung in dieser Ebene. Das Absorberrohr 122 ist dann zweidimensional gebogen (es lässt sich auf eine ebene Unterlage eben auflegen).

Eine Mehrzahl solcher Absorberrohre 122 lässt sich zur Bildung einer Absorberstruktur 124 nebeneinander positionieren. Beispielsweise lässt sich dadurch eine "flächige" Absorberstruktur 124 erreichen, welche an eine Fluidzuführungseinrichtung 126 und Fluidabführungseinrichtung 128 anschließbar ist, wobei die Fluidzuführungseinrichtung 126 und die Fluidabführungseinrichtung 128 insbesondere durch parallel liegende Rohre mit linearer Erstreckung bildbar ist.

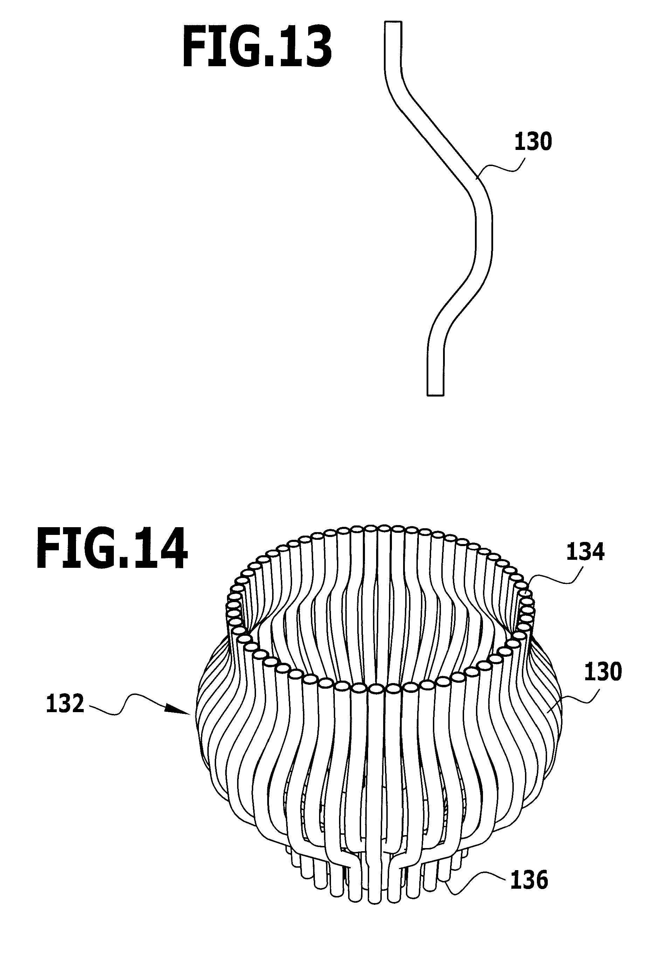

Es ist auch möglich (Figuren 13 und 14), ein Absorberrohr 130 herzustellen, welches zweidimensional gebogen ist, und entsprechende Absorberrohr 130 zu einer "dreidimensionalen" Absorberstruktur 132 zusammenzusetzen. Beispielsweise sind Eintrittsöffnungen 134 der Absorberrohre 130 auf einem Kreis angeordnet und Austrittsöffnungen 136 auf einem Kreis angeordnet. Als Fluidzuführungseinrichtung 126 lässt sich dann ein Ringrohr verwenden. Ebenfalls lässt sich als Fluidabführungseinrichtung ein Ringrohr verwenden.

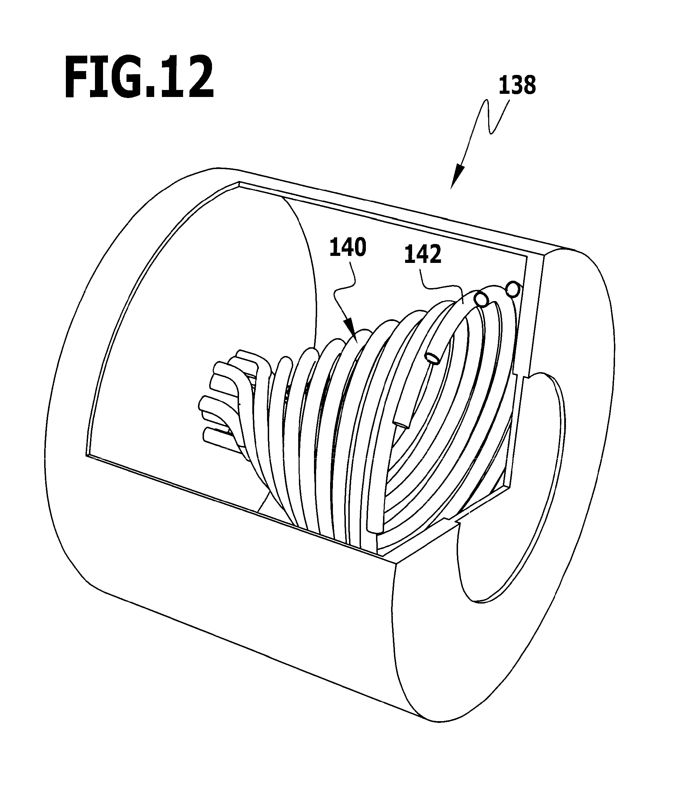

Bei einem zehnten Ausführungsbeispiel, welches in Figur 12 schematisch gezeigt und dort mit 138 bezeichnet ist, ist eine Absorberstruktur 140 vorgesehen, welche nicht eben ist. Die Absorberstruktur 140 ist beispielsweise domförmig ausgestaltet. Sie weist ein Wölbung auf; Absorberrohre 142 der Absorberstruktur 140 sind nicht eben angeordnet.

Die Geometrie der Absorberstruktur 140 mit den Absorberrohren 142 kann so angepasst werden, dass sich eine gleichmäßige Flussdichteverteilung bei guter Dehnungskompensation ergibt.

Es lässt sich beispielsweise auch die Absorberstruktur 132 einsetzen.

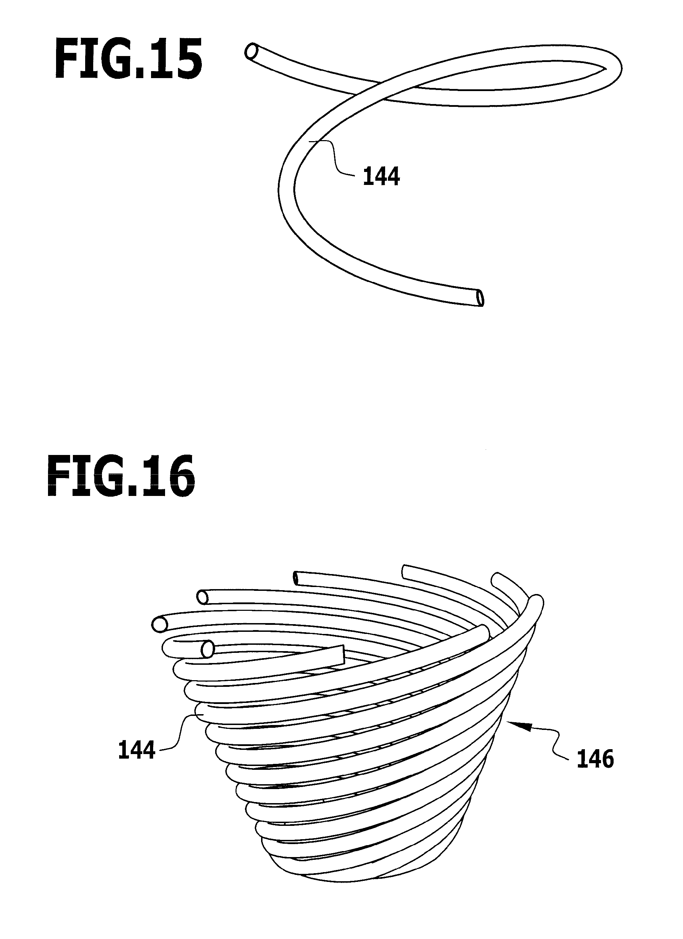

Es ist auch möglich, dass Absorberrohre 144 (Figuren 15, 16) dreidimensional gebogen werden. Dadurch lassen sich Wärmedehnungen kompensieren. Es lässt sich dann eine dreidimensionale, gewölbte Absorberstruktur 145 ausbilden. Diese wiederum lässt sich bei dem Solarstrahlungsempfänger 138 einsetzen. Durch numerisch gesteuerte Biegemaschinen lassen sich entsprechende Absorberrohre 142 herstellen.

Durch die erfindungsgemäßen Lösungen kann beim Solarstrahlungsempfänger mit Absorberrohren (Rohrreceiver) die maximal mögliche Austrittstemperatur wesentlich erhöht werden. Es wird erwartet, dass sich Temperaturen bis ca. 900°C mit hohen Wirkungsgraden und hoher Lebensdauer des Solarstrahlungsempfängers erreichen lassen. Dadurch wird die Kombination einer Mikroturbine mit einem einzelnen Solarstrahlungsempfänger zu einem solaren Kleinkraftwerk möglich.

Es kann grundsätzlich auch vorgesehen sein, dass durch gezielte Steuerung/Regelung der Massenstromverteilung höher belastete Absorberrohre mit einem höheren Massenstrom beaufschlagt werden, um eine bessere Kühlung zu erreichen. Diese Steuerung/Regelung der Massenstromverteilung kann insbesondere durch verstellbare Strömungswiderstände an Eintrittsöffnungen bzw. Austrittsöffnungen von Absorberrohren erfolgen.

## Patentansprüche

1. Solarstrahlungsempfänger zur solaren Erhitzung eines Wärmeübertragungsfluids, umfassend eine Fluidzuführungseinrichtung (36; 80), eine Fluidabführungseinrichtung (38; 82), und zwischen der Fluidzuführungseinrichtung (36; 80) und der Fluidabführungseinrichtung (38; 82) angeordnete Absorberrohre (50; 88; 90) zur Fluidführung, welche mit Solarstrahlung (28) beaufschlagbar sind,
**dadurch gekennzeichnet, dass** bezogen auf die Strömungsführung des Wärmeübertragungsfluids zwischen der Fluidzuführungseinrichtung (36; 80) und der Fluidabführungseinrichtung (38; 82) mindestens ein Zwischenverteilungsraum (54; 84) angeordnet ist, welcher über Absorberrohre (50; 88; 90) in fluidwirksamer Verbindung mit der Fluidzuführungseinrichtung (36; 80) und der Fluidabführungseinrichtung (38; 82) steht.

2. Solarstrahlungsempfänger nach Anspruch 1, **dadurch gekennzeichnet, dass** in den mindestens einen Zwischenverteilungsraum (54; 84) mindestens ein Absorberrohr (56; 88) mündet, welches mit der Fluidzuführungseinrichtung (36; 80) oder einem benachbarten Zwischenverteilungsraum verbunden ist.

3. Solarstrahlungsempfänger nach Anspruch 2, **dadurch gekennzeichnet, dass** eine Mehrzahl von Absorberrohren (56; 88) in den mindestens einen Zwischenverteilungsraum (54; 84) mündet.

4. Solarstrahlungsempfänger nach einem der vorangehenden Ansprüche, **dadurch gekennzeichnet, dass** von dem mindestens einen Zwischenverteilungsraum (54; 84) mindestens ein Absorberrohr (60; 90) zu der Fluidabführungseinrichtung (38; 82) oder einem benachbarten Zwischenverteilungsraum geführt ist.

5. Solarstrahlungsempfänger nach Anspruch 4, **dadurch gekennzeichnet, dass** eine Mehrzahl von Absorberrohren (60; 90) von dem mindestens einen Zwischenverteilungsraum (54; 84) zu der Fluidabführungseinrichtung (38; 82) geführt sind.

6. Solarstrahlungsempfänger nach einem der vorangehenden Ansprüche, **dadurch gekennzeichnet, dass** der mindestens eine Zwischenverteilungsraum (54; 84) eine Erstreckungsrichtung aufweist, welche mindestens näherungsweise parallel zu einer Erstreckungsrichtung (42) der mindestens einen Fluidzuführungseinrichtung (36; 80) ist.

7. Solarstrahlungsempfänger nach einem der vorangehenden Ansprüche, **dadurch gekennzeichnet, dass** der mindestens eine Zwischenverteilungsraum (54; 84) eine Erstreckungsrichtung aufweist, welche mindestens näherungsweise parallel zu einer Erstreckungsrichtung (42) der mindestens einen Fluidabführungseinrichtung (38; 82) ist.

8. Solarstrahlungsempfänger nach einem der vorangehenden Ansprüche, **dadurch gekennzeichnet, dass** der mindestens eine Zwischenverteilungsraum (54; 84) eine Erstreckungsrichtung aufweist, welche quer zu der Erstreckungsrichtung von Absorberrohren (56; 60; 88; 90) liegt.

9. Solarstrahlungsempfänger nach Anspruch 8, **dadurch gekennzeichnet, dass** die Abmessungen des mindestens einen Zwischenverteilungsraums (54; 84) in seiner Erstreckungsrichtung größer sind als der Abstand benachbarter Absorberrohre (56; 60; 88; 90).

10. Solarstrahlungsempfänger nach einem der vorangehenden Ansprüche, **dadurch gekennzeichnet, dass** Absorberrohre (56; 60; 88; 90), welche von der Fluidzuführungseinrichtung (36; 80) zu der Fluidabführungseinrichtung (38; 82) führen, im wesentlichen parallel zueinander angeordnet sind.

11. Solarstrahlungsempfänger nach einem der vorangehenden Ansprüche, **dadurch gekennzeichnet, dass** der mindestens eine Zwischenverteilungsraum (54; 84) in einem Rohr (40; 86) gebildet ist.

12. Solarstrahlungsempfänger nach einem der vorangehenden Ansprüche, **dadurch gekennzeichnet, dass** der mindestens eine Zwischenverteilungsraum (54; 84) so ausgebildet und angeordnet ist, dass Wärmeübertragungsfluid, welches aus verbundenen Absorberrohren (56; 88) einströmt, in dem Zwischenverteilungsraum (54; 84) mischbar ist.

13. Solarstrahlungsempfänger nach einem der vorangehenden Ansprüche, **dadurch gekennzeichnet, dass** der mindestens eine Zwischenverteilungsraum (54) so ausgebildet und angeordnet ist, dass die Strömungsrichtung von Wärmeübertragungsfluid veränderbar ist.

14. Solarstrahlungsempfänger nach Anspruch 13, **dadurch gekennzeichnet, dass** die Strömungsrichtung umkehrbar ist.

15. Solarstrahlungsempfänger nach einem der vorangehenden Ansprüche, **dadurch gekennzeichnet, dass** mindestens eine erste Lage (58) und eine zweite Lage (62) an Absorberrohren (56; 60) vorgesehen ist, wobei die erste Lage (58) vor der zweiten Lage (62) angeordnet ist.

16. Solarstrahlungsempfänger nach Anspruch 15, **dadurch gekennzeichnet, dass** Absorberrohre der ersten Lage (58) zwischen der Fluidzuführungseinrichtung (36) und dem mindestens einen Zwischenverteilungsraum (54) geführt sind und Absorberrohre (60) der zweiten Lage (62) zwischen dem mindestens einen Zwischenverteilungsraum (54) und der Fluidabführungseinrichtung (38) geführt sind.

17. Solarstrahlungsempfänger nach Anspruch 15 oder 16, **dadurch gekennzeichnet, dass** die Fluidabführungseinrichtung (38) und die Fluidzuführungseinrichtung (36) auf einer dem mindestens einen Zwischenverteilungsraum (54) gegenüberliegenden Seite angeordnet sind.

18. Solarstrahlungsempfänger nach einem der Ansprüche 15 bis 17, **dadurch gekennzeichnet, dass** die Fluidzuführungseinrichtung (36) und die Fluidabführungseinrichtung (38) in dem gleichen Rohr (40) angeordnet sind.

19. Solarstrahlungsempfänger nach einem der Ansprüche 15 bis 18, **dadurch gekennzeichnet, dass** Absorberrohre (56) der ersten Lage (58) versetzt zu Absorberrohren (60) der zweiten Lage (62) angeordnet sind.

20. Solarstrahlungsempfänger nach Anspruch 19, **dadurch gekennzeichnet, dass** Absorberrohre (56) der ersten Lage (58) Absorberrohre (60) der zweiten Lage (62) mindestens teilweise bezüglich Solarstrahlung abdecken.

21. Solarstrahlungsempfänger nach dem Oberbegriff von Anspruch 1 oder einem der vorangehenden Ansprüche, **dadurch gekennzeichnet, dass** ein Absorberrohr (16; 122; 130; 144) eine Kompensationseinrichtung (30) zur Dehnungskompensation aufweist.

22. Solarstrahlungsempfänger nach Anspruch 21, **dadurch gekennzeichnet, dass** die Kompensationseinrichtung (30) durch aufeinanderfolgende Bereiche (32) unterschiedlichen Durchmessers gebildet ist.

23. Solarstrahlungsempfänger nach Anspruch 21 oder 22, **dadurch gekennzeichnet, dass** die Kompensationseinrichtung mittels mindestens einem Biegebereich an dem Absorberrohr (122; 130; 144) gebildet ist.

24. Solarstrahlungsempfänger nach dem Oberbegriff von Anspruch 1 oder einem der vorangehenden Ansprüche, **dadurch gekennzeichnet, dass** ein Absorberrohr über eine Erstreckungsrichtung einen variierenden Querschnitt aufweist.

25. Solarstrahlungsempfänger nach Anspruch 24, **dadurch gekennzeichnet, dass** mindestens ein Bereich mit einem sich erweiternden Querschnitt vorgesehen ist.

26. Solarstrahlungsempfänger nach dem Oberbegriff von Anspruch 1 oder einem der vorangehenden Ansprüche, **dadurch gekennzeichnet, dass** bezogen auf die Solarstrahlungsrichtung vor einem oder mehreren Absorberrohren (113; 116) ein Glasvorbau (112; 118; 120) angeordnet ist.

27. Solarstrahlungsempfänger nach Anspruch 26, **dadurch gekennzeichnet, dass** der Glasvorbau durch eine oder mehrere Glasplatten (112) gebildet ist.

28. Solarstrahlungsempfänger nach Anspruch 26, **dadurch gekennzeichnet, dass** der Glasvorbau durch ein Glasrohr (118) oder ein Glasrohrteil (120) gebildet ist, welcher ein Absorberrohr (116) mindestens teilweise umgibt.

29. Solarstrahlungsempfänger nach dem Oberbegriff von Anspruch 1 oder einem der vorangehenden Ansprüche, **dadurch gekennzeichnet, dass** die Absorberrohre in einem Hohlraum (96) angeordnet sind.

30. Solarstrahlungsempfänger nach Anspruch 29, **dadurch gekennzeichnet, dass** der Hohlraum (96) wärmegedämmt ist.

31. Solarstrahlungsempfänger nach Anspruch 29 oder 30, **dadurch gekennzeichnet, dass** der Hohlraum (96) reflektierende Innenwände aufweist.

32. Solarstrahlungsempfänger nach einem der Ansprüche 29 bis 31, **dadurch gekennzeichnet, dass** der Hohlraum (96) eine Strahlungs-Durchtrittsöffnung (100) aufweist.

33. Solarstrahlungsempfänger nach Anspruch 32, **dadurch gekennzeichnet, dass** die Strahlungs-Durchtrittsöffnung (100) bezüglich Größe und/oder Form variabel einstellbar ist.

34. Solarstrahlungsempfänger nach Anspruch 32 oder 33, **dadurch gekennzeichnet, dass** an der Strahlungs-Durchtrittsöffnung (100) ein Glaselement (106) oder Glasvorbau (112; 118; 120) angeordnet ist.

35. Solarstrahlungsempfänger nach dem Oberbegriff von Anspruch 1 oder einem der vorangehenden Ansprüche, **dadurch gekennzeichnet, dass** an einem Absorberrohr (70) mindestens eine Einblasdüse (72) zur Eindüsung eines Gases oder einer Flüssigkeit angeordnet ist.

36. Solarstrahlungsempfänger nach dem Oberbegriff von Anspruch 1 oder einem der vorangehenden Ansprüche, **dadurch gekennzeichnet, dass** Absorberrohre (122; 130; 144) gebogen sind.

37. Solarstrahlungsempfänger nach Anspruch 36, **dadurch gekennzeichnet, dass** Absorberrohre (112; 130) zweidimensional gebogen sind.

38. Solarstrahlungsempfänger nach Anspruch 36, **dadurch gekennzeichnet, dass** Absorberrohre (130) dreidimensional gebogen sind.

39. Solarstrahlungsempfänger nach einem der Ansprüche 36 bis 38, **dadurch gekennzeichnet, dass** die Absorberrohre (130) an eine ringförmige Fluidabführungseinrichtung und/oder Fluidzuführungseinrichtung angeschlossen sind.

40. Solarstrahlungsempfänger nach einem der Ansprüche 36 bis 39, **dadurch gekennzeichnet, dass** eine Einhüllende der Absorberflächen der Absorberrohre nicht-eben ist.

41. Verfahren zur Steuerung und/oder Regelung der Massenverteilung und/oder zum Temperaturausgleich an einem Solarstrahlungsempfänger mit Absorberrohren, durch welche eine Wärmeübertragungsfluid geführt wird, bei dem eine Flüssigkeit und/oder ein Gas in ein Absorberrohr eingedüst wird und/oder einstellbare Strömungswiderstände eingestellt werden und/oder Wärmeübertragungsfluid aus unterschiedlichen Absorberrohren gemischt wird und das Mischungsfluid auf unterschiedliche Absorberrohre weiterverteilt wird.
